# EUROPÄISCHE PATENTSCHRIFT

(11) **EP 3 320 239 B1**
(45) Veröffentlichungstag und Bekanntmachung des Hinweises auf die Patenterteilung: **11.09.2019**
(21) Anmeldenummer: 16747723.1
(22) Anmeldetag: 01.07.2016
(51) Int. Cl.: B60C 23/00, F16J 15/34

(54) **DREHDURCHFÜHRUNG FÜR EIN FAHRZEUG**
ROTARY FEEDTHROUGH FOR A VEHICLE
PASSAGE TOURNANT POUR UN VÉHICULE

(30) Priorität: 07.07.2015 DE 102015212642
(43) Veröffentlichungstag der Anmeldung: 16.05.2018
(73) Patentinhaber: Schaeffler Technologies AG & Co. KG, 91074 Herzogenaurach (DE); GAPI Technische Produkte GmbH, 51503 Rösrath (DE)
(72) Erfinder: BREHM, Horst, 96120 Bischberg (DE); FLINT, Andreas, 50678 Köln (DE); HOFMANN, Andre, 97453 Schonungen / Abersfeld (DE); NIEDERLE, Sebastian, 97505 Geldersheim (DE); SCHÄFER, Marc-André, 97532 Üchtelhausen (DE); HEUBERGER, Robert, 97422 Schweinfurt (DE)
(86) Internationale Anmeldenummer: PCT/DE2016/200303
(87) Internationale Veröffentlichungsnummer: WO 2017/005260

(56) Entgegenhaltungen:
- DE-A1- 3 604 137
- DE-A1- 19 930 964
- US-A- 5 967 524

## Beschreibung

Die Erfindung betrifft eine Drehdurchführung zur Fluidspeisung eines Druckraumes, der zwischen einem rotierbaren Bauteil und einem stationär festgelegten Bauteil eines Fahrzeugs angeordnet ist, umfassend einen Dichtungsträger mit mindestens einem Kanal zur fluidtechnischen Verbindung mit dem Druckraum, wobei an dem Dichtungsträger mindestens zwei axial beabstandete Dichtungsringe zur statischen Abdichtung des mindestens einen Kanals angeordnet sind.

### Gebiet der Erfindung

Drehdurchführungen werden insbesondere bei LKWs und Traktoren eingesetzt, die auf unterschiedlichem Untergrund fahren, um den Reifendruck den Fahrbahneigenschaften anzupassen. Im Gelände oder auf unbefestigten Straßen ist es von Vorteil, wenn ein Reifendruck gering ist, um die Traktion des Fahrzeugs zu erhöhen. Auf befestigten Straßen wird ein demgegenüber höherer Reifendruck angestrebt, um einen Reifenverschleiß und einen Kraftstoffverbrauch gering zu halten. Die Drehdurchführung erlaubt eine variable Einstellung des Reifendrucks durch eine Erhöhung oder Senkung des Luftdruckes in einer Druckluftkammer.

Die DE 10 2012 222 339 A1 offenbart eine Fluiddrehdurchführung zur Abdichtung eines Fluiddruckraumes zwischen einer rotierbaren Welle und einer Wellenaufnahme. Die Fluiddrehdurchführung umfasst einen Dichtringträger und einen Passkörper, wobei der Dichtringträger drehfest und fluiddicht mit der Welle oder der Aufnahme verbunden ist und der Passkörper fluiddicht an der Aufnahme oder der Welle anliegt. Der Passkörper und der Dichtringträger sind zumindest abschnittsweise radial voneinander beabstandet, um zwischen sich einen Fluiddruckraum auszubilden. Ferner sind zwei axial voneinander beabstandete Dichtringe vorgesehen, die jeweils mit einer Anlagefläche abdichtend gegen den Dichtringträger und mit einer Anlagefläche abdichtend gegen den Passkörper anliegen, um beidseitig den Fluiddruckraum nach außen abzudichten, und die jeweils, vorzugsweise unabhängig voneinander, gegenüber dem Dichtringträger und/oder dem Passkörper verdrehbar sind. Der Dichtringträger und der Passkörper bilden gemeinsam zwei axial beabstandete Aufnahmenuten für die Dichtringe, wobei die Aufnahmenuten zum Fluiddruckraum hin offen sind und jeweils zumindest einen Haltevorsprung umfassen, der den in der Aufnahmenut angeordneten Dichtring zumindest bereichsweise gegen eine radiale Lageveränderung aus der Nut zum Fluiddruckraum hin sichert.

Mit anderen Worten ist der jeweilige Dichtring dazu vorgesehen sowohl radial als auch axial abzudichten. Je nach Ausführungsform erwachsen daraus aber unterschiedliche Probleme. Zum einen ist eine Montage des Dichtrings aufgrund des notwendigen geringen Durchmessers zur festen Anlage erschwert, sofern der Dichtring keinen Schlitz zur Vereinfachung der axialen Verschiebung aufweist. Zum anderen kommt es bei einer geschlitzten Ausführungsform des Dichtrings zu Leckagen, wodurch die Dichtwirkung herabgesetzt wird.

Die DE 36 04 137 A1 beschreibt eine Dichtung für ein bewegliches Bauteil mit einem Dichtungsring, der über vorgespannte Federelemente in Anlage mit einem beweglichen Bauteil gehalten ist

### Aufgabenstellung

Die Aufgabe der Erfindung besteht darin, eine Drehdurchführung weiter zu entwickeln, und insbesondere hinsichtlich einer Fertigung und einer Montage zu optimieren. Ferner sollen auch die Dichtwirkung verbessert und die Lebensdauer verlängert werden.

### Erfindungsgemäße Lösung

Die Aufgabe wird für die Drehdurchführung zur Fluidspeisung eines Druckraumes, der zwischen einem rotierbaren Bauteil und einem stationär festgelegten Bauteil eines Fahrzeugs angeordnet ist, umfassend einen Dichtungsträger mit mindestens einem Kanal zur fluidtechnischen Verbindung mit dem Druckraum, wobei an dem Dichtungsträger mindestens zwei axial beabstandete Dichtungsringe zur statischen Abdichtung des mindestens einen Kanals angeordnet sind, wobei ein erstes und ein zweites Dichtungselement an einem drehfest mit dem Dichtungsträger verbundenem Verdrehsicherungselement angeordnet, wobei das erste Dichtungselement zur dynamischen Abdichtung des Druckraumes vorgesehen ist, und wobei das zweite Dichtungselement zur statischen Abdichtung des Druckraumes vorgesehen ist, dadurch gelöst, dass das zweite Dichtungselement axial zwischen dem ersten Dichtungselement und einer radial ausgebildeten Schulter am Verdrehsicherungselement angeordnet ist.

Somit wird das erste Dichtungselement dazu genutzt eine drehbewegliche Dichtfläche abzudichten, wobei das zweite Dichtungselement dazu genutzt wird eine drehfeste Dichtfläche abzudichten. Die beiden Dichtungen sind dabei auf einem gemeinsamen Verdrehsicherungselement montiert, das drehfest mit dem Dichtungsträger verbunden ist. Dadurch, dass das zweite Dichtungselement axial zwischen dem ersten Dichtungselement und einer radial ausgebildeten Schulter am Verdrehsicherungselement angeordnet ist, wird das zweite Dichtungselement positionsgenau fixiert und gegenüber der Dichtfläche am Dichtungsträger positioniert. Insbesondere dient die Drehdurchführung zur Verbindung eines Reifens eines Fahrzeugs mit einer Druckluftquelle, um den Luftdruck im Reifen variabel einstellen zu können.

Vorzugsweise kommt das erste Dichtungselement axial, dynamisch dichtend an einem drehbeweglichen Ringelement zur Anlage und das zweite Dichtungselement radial, statisch dichtend am Dichtungsträger zur Anlage. Mithin dichtet das erste Dichtungselement lediglich axial ab, wobei das zweite Dichtungselement lediglich radial abdichtet. Daher wirkt auf das erste Dichtungselement lediglich eine Axialkraft, wobei auf das zweite Dichtungselement lediglich eine Radialkraft wirkt. Das drehbewegliche Ringelement ist vorzugsweise drehfest mit dem drehbeweglichen Bauteil verbunden. Je nach Anwendungsgebiet der Drehdurchführung ist das drehbewegliche Bauteil entweder eine Welle an einem Innenumfang der Drehdurchführung oder ein Gehäuseteil an einem Außenumfang der Drehdurchführung.

Besonders bevorzugt ist eine am drehbeweglichen Ringelement angeordnete erste Stirnfläche des ersten Dichtungselements größer als eine am Druckraum angrenzende zweite Stirnfläche des ersten Dichtungselements. Durch diese Größenunterschiede zwischen den beiden Stirnflächen verteilt sich die Anpresskraft, die aufgrund der Druckbelastung im Druckraum auf die zweite Stirnfläche wirkt, auf die größere erste Stirnfläche, sodass der Betrag der Axialkraft, der auf die zweite Stirnfläche wirkt, geringer ist als der Betrag der Axialkraft, der auf die erste Stirnfläche wirkt. Mithin sinkt der Verschleiß an der zweiten Stirnfläche ebenso wie die Hitzebelastung zwischen der zweiten Stirnfläche und dem drehbeweglichen Ringelement.

Gemäß einem weiteren bevorzugten Ausführungsbeispiel ist das zweite Dichtungselement in einer radial ausgebildeten Nut am Verdrehsicherungselement angeordnet. Die Nut dient zur Aufnahme und Fixierung des zweiten Dichtungselements. Vorteilhafterweise weist die Nut entweder einen runden oder eckigen Querschnitt auf und ist im Wesentlichen komplementär zu dem Dichtungsbereich des zweiten Dichtungselements ausgebildet, der in der Nut aufgenommen wird.

Die Erfindung schließt die technische Lehre ein, dass das erste Dichtungselement aus einem Polytetrafluorethylenwerkstoff (PTFE) und/oder das zweite Dichtungselement aus einem Elastomerwerkstoff und/oder das Verdrehsicherungselement aus einem Polyamidwerkstoff hergestellt sind. Mit anderen Worten ist zumindest das erste Dichtungselement aus einem Polytetrafluorethylenwerkstoff hergestellt oder zumindest das zweite Dichtungselement aus einem Elastomerwerkstoff hergestellt oder zumindest das Verdrehsicherungselement aus einem Polyamidwerkstoff hergestellt. Vorteilhafterweise ist das erste Dichtungselement aus einem Polytetrafluorethylenwerkstoff und das zweite Dichtungselement aus einem Elastomerwerkstoff und das Verdrehsicherungselement aus einem Polyamidwerkstoff hergestellt. Als Polyamidwerkstoff ist aufgrund der guten Bearbeitbarkeit, insbesondere PA 6.6 GF20 vorgesehen.

Die Herstellung des ersten Dichtungselements aus einem Polytetrafluorethylenwerkstoff realisiert eine besonders vorteilhafte dynamische Dichtung, die sowohl eine gute Temperaturbeständigkeit als auch sehr gute Gleiteigenschaften und eine hohe Abriebfestigkeit aufweist. Polytetrafluorethylen weist eine ausreichende Steifigkeit und Formbeständigkeit auf, um auch hohen axialen Kräften stand halten zu können. Demgegenüber ist das aus einem Elastomerwerkstoff hergestellte zweite Dichtungselement besonders weich und anschmiegsam, um Toleranzen auszugleichen und eine einfache Montage zu ermöglichen. Ferner sind die Herstellungs- und Materialkosten des zweiten Dichtungselements deutlich geringer als die Herstellungs- und Materialkosten des ersten Dichtungselements. Mithin erlaubt die Anwendung von zwei unterschiedlichen Dichtungselementen eine kostengünstigere Fertigung als auch eine einfachere Montage sowie eine verbesserte Dichtwirkung und verlängerte Lebensdauer.

Vorzugsweise ist das erste Dichtungselement drehfest mit dem Verdrehsicherungselement verbunden, wobei das Verdrehsicherungselement mindestens fünf rechteckige Nocken aufweist, die zur formschlüssigen Verbindung mit jeweils einer korrespondierend dazu ausgebildeten Nut am ersten Dichtungselement zusammenwirken. Die mindestens fünf rechteckigen Nocken sind vorzugsweise über den Umfang gleichmäßig verteilt an einer ersten Stirnfläche des Verdrehsicherungselements ausgebildet und erlauben eine gleichmäßige Verteilung der Haltekräfte am ersten Dichtungselement und am Verdrehsicherungselement.

Besonders bevorzugt weisen mindestens zwei Nuten des ersten Dichtungselements zur axialen Fixierung am Verdrehsicherungselement einen Hinterschnitt auf. Mit anderen Worten kann durch den Hinterschnitt das erste Dichtungselement an dem Verdrehsicherungselement angeknipst werden, wobei ein ungewolltes axiales Lösen durch den Hinterschnitt verhindert wird.

Des Weiteren bevorzugt weist das Verdrehsicherungselement mindestens fünf trapezförmige Nocken auf, die zur formschlüssigen Verbindung mit jeweils einer korrespondierend dazu ausgebildeten Nut am Dichtungsträger zusammenwirken. Dabei dienen die trapezförmigen Nocken nicht nur zur formschlüssigen Verbindung zwischen dem Verdrehsicherungselement und dem Dichtungsträger, sondern auch zur Generierung einer Axialkraft. Eine kurze Basis des Trapezes befindet sich dafür auf der Seite des Dichtungsträgers, sodass in einem Dichtfall eine Axialkraft generiert wird, die ein Anlegen des ersten Dichtungselements unterstützt. Insbesondere weicht die Neigung der beiden Trapezschenkel jeweils um 5° bis 25°, besonders bevorzugt um 10° bis 15° von einem rechtwinklig ausgebildeten Schenkel, wie beispielsweise bei rechtwinkligen Nocken. Die mindestens fünf trapezförmigen Nocken sind vorzugsweise über den Umfang gleichmäßig verteilt an einer zweiten Stirnfläche des Verdrehsicherungselements ausgebildet und erlauben eine gleichmäßige Verteilung der Haltekräfte am Dichtungsträger und am Verdrehsicherungselement.

Ferner bevorzugt weist das erste Dichtungselement mindestens eine Entlastungsbohrung auf, die den Druckraum fluidtechnisch mit einem Gegendruckraum verbindet. Die mindestens eine Entlastungsbohrung ist dabei vorzugsweise axial ausgebildet. Bei einem Druckaufbau im Druckraum entweicht durch die mindestens eine Entlastungsbohrung im ersten Dichtungselement die Druckluft aus dem Druckraum in den Gegendruckraum, wodurch sich ein Gegendruck auf die Druckfläche des ersten Dichtungselements, die innerhalb des Gegendruckraumes angeordnet ist, aufbaut. Dieser Gegendruck wirkt dem auf die am Druckraum angrenzende zweite Stirnfläche wirkenden Druck entgegen und senkt dadurch eine Anpresskraft des ersten Dichtungselements am drehbeweglichen Ringelement. Mehrere Entlastungsbohrungen, die einen kleinen Durchmesser aufweisen begünstigen einen langsamen Aufbau des Gegendruckes im Gegendruckraum.

### Kurzbeschreibung der Zeichnung

Weitere die Erfindung verbessernde Maßnahmen werden nachstehend gemeinsam mit der Beschreibung bevorzugter Ausführungsbeispiele der Erfindung anhand der Figuren näher dargestellt. Es zeigen
- Figur 1: einen Teil einer schematischen Schnittdarstellung zur Veranschaulichung des Aufbaus einer erfindungsgemäßen Drehdurchführung gemäß einem ersten Ausführungsbeispiel,
- Figur 2: einen Teil einer schematischen Schnittdarstellung zur Veranschaulichung des Aufbaus einer erfindungsgemäßen Drehdurchführung gemäß einem zweiten Ausführungsbeispiel,
- Figur 3: einen Teil einer schematischen Schnittdarstellung zur Veranschaulichung des Aufbaus einer erfindungsgemäßen Drehdurchführung gemäß einem dritten Ausführungsbeispiel,
- Figur 4: eine schematische Explosionsdarstellung zur Veranschaulichung des Aufbaus eines erfindungsgemäßen Dichtungsträgers mit einem daran angeordneten Versicherungselements, das ein erstes Dichtungselement aufnimmt, und
- Figur 5: eine schematische Seitenansicht zur Veranschaulichung des Aufbaus des erfindungsgemäßen ersten Dichtungselements nach Figur 4.

### Ausführliche Beschreibung der Zeichnung

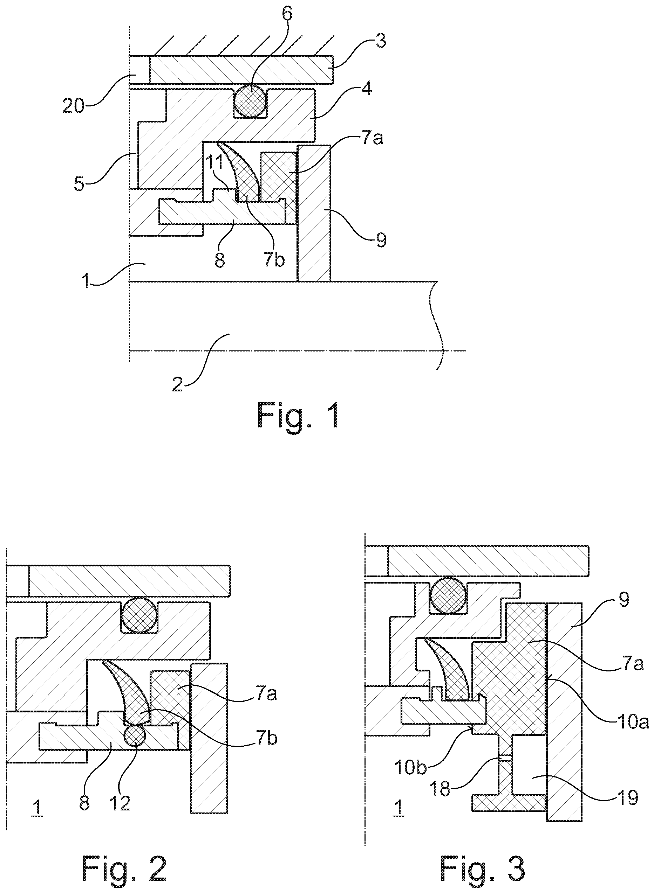

Figur 1 zeigt eine erfindungsgemäße Drehdurchführung zur Druckluftspeisung eines Druckraumes 1, der zwischen einem rotierbaren Bauteil 2 und einem stationär festgelegten Bauteil 3 eines - hier nicht dargestellten - Fahrzeugs angeordnet ist. Die Drehdurchführung umfasst einen Dichtungsträger 4 mit einem Kanal 5 zur fluidtechnischen Verbindung mit dem Druckraum 1. Der Kanal 5 ist ferner mit einem weiteren Kanal 20 verbunden, der zu einer - hier nicht dargestellten - Druckluftquelle führt. Durch die Einspeisung von Druckluft in den Druckraum 1 wird ein Reifendruck eines - hier nicht dargestellten - Reifens des Fahrzeugs variabel eingestellt und insbesondere auf die Fahrbahn abgestimmt. Ferner sind an dem Dichtungsträger 4 zwei axial beabstandete Dichtungsringe 6 zur statischen Abdichtung des Kanals 5 angeordnet, wobei aufgrund der teilweisen Schnittdarstellung nur eine der beiden Dichtungsringe 6 abgebildet ist.

Darüber hinaus weist der Dichtungsträger 4 ein damit drehfest verbundenes Verdrehsicherungselement 8 auf, an dem ein erstes und ein zweites Dichtungselement 7a, 7b angeordnet sind. Das erste Dichtungselement 7a ist zur dynamischen Abdichtung des Druckraumes 1 vorgesehen und das zweite Dichtungselement 7b ist zur statischen Abdichtung des Druckraumes 1 vorgesehen. Dazu kommt das erste Dichtungselement 7a axial und dynamisch dichtend an einem drehbeweglichen Ringelement 9 zur Anlage. Das drehbewegliche Ringelement 9 ist dabei drehfest mit dem rotierbaren Bauteil 2 verbunden. Mit anderen Worten ist axial zwischen dem drehbeweglichen Ringelement 9 und dem ersten Dichtungselement 7a eine Gleitfläche ausgebildet. Demgegenüber kommt das zweite Dichtungselement 7b radial und statisch dichtend am Dichtungsträger 4 zur Anlage. Der Dichtungsträger 4 ist drehfest mit dem stationär festgelegten Bauteil 3 verbunden. Das zweite Dichtungselement 7b ist axial zwischen dem ersten Dichtungselement 7a und einer radial ausgebildeten Schulter 11 am Verdrehsicherungselement 8 drehfest und axial fixiert angeordnet. Das erste Dichtungselement 7a ist aus einem Polytetrafluorethylenwerkstoff und das zweite Dichtungselement 7b aus einem Elastomerwerkstoff hergestellt. Ferner ist das Verdrehsicherungselement 8 aus einem Polyamidwerkstoff hergestellt.

Gemäß Figur 2 ist das zweite Dichtungselement 7b in einer radial ausgebildeten Nut 12 am Verdrehsicherungselement 8 angeordnet. Dadurch wird das zweite Dichtungselement 7b axial positioniert und drehfest gesichert. Ferner ist auch das erste Dichtungselement 7a drehfest mit dem Verdrehsicherungselement 8 verbunden.

Nach Figur 3 ist eine am drehbeweglichen Ringelement 9 angeordnete erste Stirnfläche 10a des ersten Dichtungselements 7a größer als eine am Druckraum 1 angrenzende zweite Stirnfläche 10b des ersten Dichtungselements 7a. Ferner weist das erste Dichtungselement 7a eine Entlastungsbohrung 18 auf, die den Druckraum 1 fluidtechnisch mit einem Gegendruckraum 19 verbindet. Sowohl das Verhältnis der beiden Stirnflächen 10a, 10b zueinander als auch die Entlastungsbohrung 18 sind dafür vorgesehen, den Anpressdruck des ersten Dichtungselements 7a an dem drehbeweglichen Ringelement 9 zu senken und dadurch die Lebensdauer des ersten Dichtungselements 7a zu verlängern.

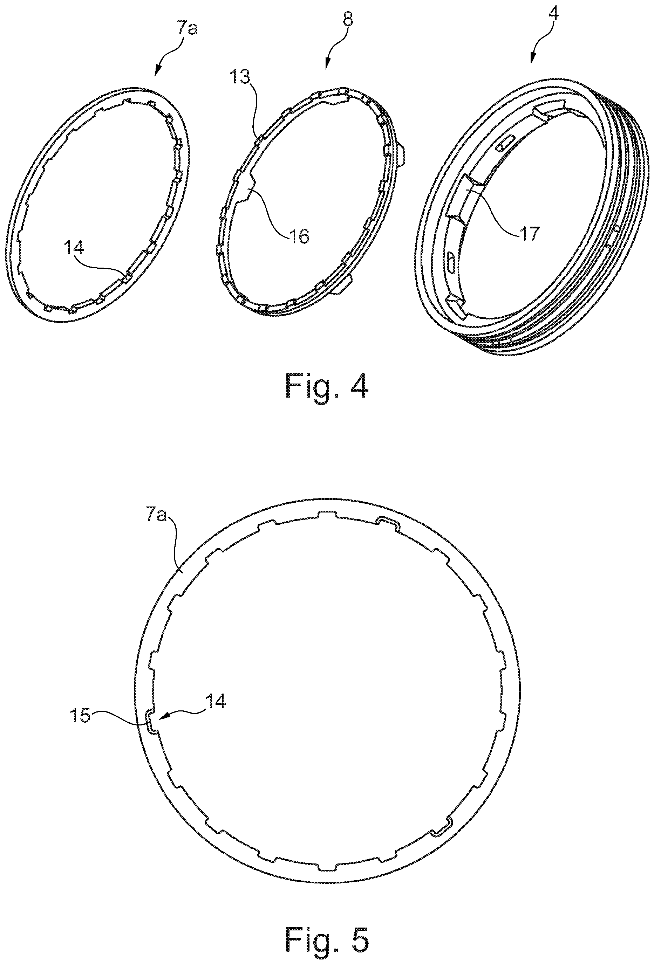

Gemäß Figur 4 weist das Verdrehsicherungselement 8 an einer ersten Stirnfläche mehrere über den Umfang gleichmäßig verteilte, sich axial erstreckende rechteckige Nocken 13 auf, die zur formschlüssigen Verbindung mit jeweils einer korrespondierend dazu ausgebildeten Nut 14 am ersten Dichtungselement 7a zusammenwirken. Ferner weist das Verdrehsicherungselement 8 an einer zweiten Stirnfläche mehrere über den Umfang gleichmäßig verteilte, sich axial erstreckende trapezförmige Nocken 16 auf, die zur formschlüssigen Verbindung mit jeweils einer korrespondierend dazu ausgebildeten Nut 17 am Dichtungsträger 4 zusammenwirken.

Nach Figur 5 weisen drei rechteckige Nuten 14 des ersten Dichtungselements 7a zur axialen Fixierung am - in dieser Figur nicht dargestellten - Verdrehsicherungselement einen Hinterschnitt 15 auf.

### Bezugszeichenliste

- 1: Druckraum
- 2: rotierbares Bauteil
- 3: stationär festgelegtes Bauteil
- 4: Dichtungsträger
- 5: Kanal
- 6: Dichtungsring
- 7a, 7b: Dichtungselement
- 8: Verdrehsicherungselement
- 9: drehbewegliches Ringelement
- 10a, 10b: Stirnfläche
- 11: Schulter
- 12: Nut
- 13: rechteckige Nocken
- 14: rechteckigen Nut
- 15: Hinterschnitt
- 16: trapezförmiger Nocken
- 17: trapezförmige Nut
- 18: Entlastungsbohrung
- 19: Gegendruckraum
- 20: Kanal

## Patentansprüche

1. Drehdurchführung zur Fluidspeisung eines Druckraumes (1), der zwischen einem rotierbaren Bauteil (2) und einem stationär festgelegten Bauteil (3) eines Fahrzeugs angeordnet ist, umfassend einen Dichtungsträger (4) mit mindestens einem Kanal (5) zur fluidtechnischen Verbindung mit dem Druckraum (1), wobei an dem Dichtungsträger (4) mindestens zwei axial beabstandete Dichtungsringe (6) zur statischen Abdichtung des mindestens einen Kanals (5) angeordnet sind, wobei ein erstes und ein zweites Dichtungselement (7a, 7b) an einem drehfest mit dem Dichtungsträger (4) verbundenem Verdrehsicherungselement (8) angeordnet sind, wobei das erste Dichtungselement (7a) zur dynamischen Abdichtung des Druckraumes (1) vorgesehen ist, und wobei das zweite Dichtungselement (7b) zur statischen Abdichtung des Druckraumes (1) vorgesehen ist,
**dadurch gekennzeichnet, dass** das zweite Dichtungselement (7b) axial zwischen dem ersten Dichtungselement (7a) und einer radial ausgebildeten Schulter (11) am Verdrehsicherungselement (8) angeordnet ist.

2. Drehdurchführung nach Anspruch 1,
**dadurch gekennzeichnet, dass** das erste Dichtungselement (7a) axial, dynamisch dichtend an einem drehbeweglichen Ringelement (9) zur Anlage kommt und das zweite Dichtungselement (7b) radial, statisch dichtend am Dichtungsträger (4) zur Anlage kommt.

3. Drehdurchführung nach Anspruch 2,
**dadurch gekennzeichnet, dass** eine am drehbeweglichen Ringelement (9) angeordnete erste Stirnfläche (10a) des ersten Dichtungselements (7a) größer ist als eine am Druckraum (1) angrenzende zweite Stirnfläche (10b) des ersten Dichtungselements (7a).

4. Drehdurchführung nach Anspruch 1,
**dadurch gekennzeichnet, dass** das zweite Dichtungselement (7b) in einer radial ausgebildeten Nut (12) am Verdrehsicherungselement (8) angeordnet ist.

5. Drehdurchführung nach Anspruch 1,
**dadurch gekennzeichnet, dass** das erste Dichtungselement (7a) aus einem Polytetrafluorethylenwerkstoff und/oder das zweite Dichtungselement (7b) aus einem Elastomerwerkstoff und/oder das Verdrehsicherungselement (8) aus einem Polyamidwerkstoff hergestellt sind.

6. Drehdurchführung nach Anspruch 1,
**dadurch gekennzeichnet, dass** das erste Dichtungselement (7a) drehfest mit dem Verdrehsicherungselement (8) verbunden ist, wobei das Verdrehsicherungselement (8) mindestens fünf rechteckige Nocken (13) aufweist, die zur formschlüssigen Verbindung mit jeweils einer korrespondierend dazu ausgebildeten Nut (14) am ersten Dichtungselement (7a) zusammenwirken.

7. Drehdurchführung nach Anspruch 6,
**dadurch gekennzeichnet, dass** mindestens zwei Nuten (14) des ersten Dichtungselements (7a) zur axialen Fixierung am Verdrehsicherungselement (8) einen Hinterschnitt (15) aufweisen.

8. Drehdurchführung nach Anspruch 1,
**dadurch gekennzeichnet, dass** das Verdrehsicherungselement (8) mindestens fünf trapezförmige Nocken (16) aufweist, die zur formschlüssigen Verbindung mit jeweils einer korrespondierend dazu ausgebildeten Nut (17) am Dichtungsträger (4) zusammenwirken.

9. Drehdurchführung nach Anspruch 1,
**dadurch gekennzeichnet, dass** das erste Dichtungselement (7a) mindestens eine Entlastungsbohrung (18) aufweist, die den Druckraum (1) fluidtechnisch mit einem Gegendruckraum (19) verbindet.

## Claims

1. Rotary feedthrough for feeding fluid to a pressure chamber (1) which is arranged between a rotatable component (2) and a component (3), fixed in a stationary manner, of a vehicle, comprising a seal support (4) having at least one channel (5) for fluidic connection to the pressure chamber (1), wherein at least two axially spaced-apart seal rings (6) for the static sealing of the at least one channel (5) are arranged on the seal support (4), wherein a first and a second seal element (7a, 7b) are arranged on a rotation prevention element (8) which is connected rotationally conjointly to the seal support (4), wherein the first seal element (7a) is provided for the dynamic sealing of the pressure chamber (1), and wherein the second seal element (7b) is provided for the static sealing of the pressure chamber (1),
**characterized in that** the second seal element (7b) is arranged axially between the first seal element (7a) and a radially formed shoulder (11) on the rotation prevention element (8).

2. Rotary feedthrough according to Claim 1,
**characterized in that** the first seal element (7a) comes to bear axially against a rotationally movable ring element (9) in a dynamically sealing manner, and the second seal element (7b) comes to bear radially against the seal support (4) in a statically sealing manner.

3. Rotary feedthrough according to Claim 2,
**characterized in that** a first end surface (10a), arranged on the rotationally movable ring element (9), of the first seal element (7a) is larger than a second end surface (10b), adjacent to the pressure chamber (1), of the first seal element (7a).

4. Rotary feedthrough according to Claim 1,
**characterized in that** the second seal element (7b) is arranged in a radially formed groove (12) on the rotation prevention element (8).

5. Rotary feedthrough according to Claim 1,
**characterized in that** the first seal element (7a) is produced from a polytetrafluoroethylene material, and/or the second seal element (7b) is produced from an elastomer material, and/or the rotation prevention element (8) is produced from a polyamide material.

6. Rotary feedthrough according to Claim 1,
**characterized in that** the first seal element (7a) is connected rotationally conjointly to the rotation prevention element (8), wherein the rotation prevention element (8) has at least five rectangular projections (13), which, for the purpose of form-fitting connection, interact with in each case one correspondingly formed groove (14) on the first seal element (7a).

7. Rotary feedthrough according to Claim 6,
**characterized in that,** for the purpose of axial fixing to the rotation prevention element (8), at least two grooves (14) of the first seal element (7a) have an undercut (15).

8. Rotary feedthrough according to Claim 1,
**characterized in that** the rotation prevention element (8) has at least five trapeziform projections (16), which, for the purpose of form-fitting connection, interact with in each case one correspondingly formed groove (17) on the seal support (4).

9. Rotary feedthrough according to Claim 1,
**characterized in that** the first seal element (7a) has at least one relief bore (18), which fluidically connects the pressure chamber (1) to a counterpressure chamber (19).

## Revendications

1. Passage tournant pour l'alimentation en fluide d'un espace de pression (1) qui est disposé entre un composant rotatif (2) et un composant (3) fixé de manière stationnaire d'un véhicule, comprenant un support d'étanchéité (4) avec au moins un canal (5) pour la liaison fluidique avec l'espace de pression (1), au moins deux bagues d'étanchéité espacées axialement (6) étant disposées au niveau du support d'étanchéité (4) pour l'étanchéité statique de l'au moins un canal (5), un premier et un deuxième élément d'étanchéité (7a, 7b) étant disposés au niveau d'un élément de fixation en rotation (8) connecté de manière solidaire en rotation au support d'étanchéité (4), le premier élément d'étanchéité (7a) étant prévu pour réaliser l'étanchéité dynamique de l'espace de pression (1) et le deuxième élément d'étanchéité (7b) étant prévu pour réaliser l'étanchéité statique de l'espace de pression (1),
**caractérisé en ce que** le deuxième élément d'étanchéité (7b) est disposé axialement entre le premier élément d'étanchéité (7a) et un épaulement (11) réalisé radialement au niveau de l'élément de fixation en rotation (8).

2. Passage tournant selon la revendication 1,
**caractérisé en ce que** le premier élément d'étanchéité (7a) vient en appui axialement, de manière dynamiquement hermétique contre un élément annulaire (9) déplaçable en rotation et le deuxième élément d'étanchéité (7b) vient en appui radialement, de manière statiquement hermétique, contre le support d'étanchéité (4).

3. Passage tournant selon la revendication 2,
**caractérisé en ce qu'**une première surface frontale (10a) du premier élément d'étanchéité (7a), disposée au niveau de l'élément annulaire (9) déplaçable en rotation, est supérieure à une deuxième surface frontale (10b) du premier élément d'étanchéité (7a) adjacente à l'espace de pression (1).

4. Passage tournant selon la revendication 1,
**caractérisé en ce que** le deuxième élément d'étanchéité (7b) est disposé dans une rainure (12) réalisée radialement au niveau de l'élément de fixation en rotation (8).

5. Passage tournant selon la revendication 1,
**caractérisé en ce que** le premier élément d'étanchéité (7a) est fabriqué à partir d'un matériau en polytétrafluoroéthylène et/ou le deuxième élément d'étanchéité (7b) est fabriqué à partir d'un matériau en élastomère et/ou l'élément de fixation en rotation (8) est fabriqué à partir d'un matériau en polyamide.

6. Passage tournant selon la revendication 1,
**caractérisé en ce que** le premier élément d'étanchéité (7a) est connecté de manière solidaire en rotation à l'élément de fixation en rotation (8), l'élément de fixation rotation (8) présentant au moins cinq cames rectangulaires (13) qui, pour une liaison par engagement par correspondance de formes, coopèrent à chaque fois avec une rainure (14) réalisée de manière correspondant à celles-ci, au niveau du premier élément d'étanchéité (7a).

7. Passage tournant selon la revendication 6,
**caractérisé en ce qu'**au moins deux rainures (14) du premier élément d'étanchéité (7a), pour la fixation axiale à l'élément de fixation en rotation (8), présentent une contre-dépouille (15) .

8. Passage tournant selon la revendication 1,
**caractérisé en ce que** l'élément de fixation en rotation (8) présente au moins cinq cames de forme trapézoïdale (16) qui, pour une liaison par engagement par correspondance de formes, coopèrent à chaque fois avec une rainure (17) sur le support d'étanchéité (4), réalisée de manière correspondante à celles-ci.

9. Passage tournant selon la revendication 1,
**caractérisé en ce que** le premier élément d'étanchéité (7a) présente au moins un alésage de décharge (18) qui relie l'espace de pression (1) fluidiquement à un espace de pression conjugué (19) .
